# EUROPÄISCHE PATENTANMELDUNG

(11) **EP 2 692 820 A1**
(43) Veröffentlichungstag der Anmeldung: **05.02.2014**
(21) Anmeldenummer: 12178940.8
(22) Anmeldetag: 02.08.2012
(51) Int. Cl.: C09K 3/14, B24D 3/14, C04B 35/111

(54) **Schleifkorn mit Basiskörper, Erhebung und Öffnung**

(71) Anmelder: ROBERT BOSCH GMBH, 70442 Stuttgart (DE)
(72) Erfinder: Hejtmann, Georg, 74395 Mundelsheim (DE); Stedile, Petra, 73732 Esslingen (DE); Fuenfschilling, Stefan, 78337 Öhningen (DE)

(57) **Zusammenfassung**

Die Erfindung betrifft einerseits ein Schleifkorn (10) mit mindestens einer Öffnung (11), wobei das Schleifkorn (10) einen Basiskörper (16) und mindestens eine von dem Basiskörper (16) ausgehende Erhebung (12) aufweist, welche zumindest einen Teil der Öffnung (11) beinhaltet. Das Schleifkorn (10) kann ein keramisches Material enthalten, insbesondere polykristallines α-Al₂O₃. Zudem sind Gesamtheiten von Schleifkörnern (10), Verfahren zum Herstellen von Schleifkörnern (10), Giessformen, Schleifartikel, Verfahren zum Herstellen von Schleifartikeln und Verfahren zum Schleifen einer Oberfläche offenbart.

## Beschreibung

Die vorliegende Erfindung betrifft Schleifkörner mit definierter Form, Gesamtheiten von Schleifkörnern, Verfahren zum Herstellen von Schleifkörnern, Giesswerkzeuge, Schleifartikel mit Schleifkörnern, Verfahren zum Herstellen von Schleifartikeln sowie Verfahren zum Schleifen einer Oberfläche mit einem Schleifartikel.

Schleifkörner, insbesondere keramische Schleifkörner, mit definierter Form und Grösse sind seit einiger Zeit bekannt.

Die US 5,201,916 offenbart unter anderem flache Schleifkörner mit beispielsweise dreieckiger, rechteckiger oder kreisförmiger Form. Diese Schleifkörner werden aus einer Dispersion hergestellt, die in α-Aluminiumoxid konvertierbare Partikel und eine Flüssigkeit mit einer flüchtigen Komponente enthält. Die Dispersion wird in eine Giessform gegossen, die eine ebene Grundfläche und Vertiefungen aufweist, deren Formen komplementär zur gewünschten Formen der Schleifkörner sind. Anschliessend wird ein Teil der flüchtigen Komponente entfernt, so dass ein Vorprodukt mit der gewünschten Form entsteht. Das Vorprodukt wird dann aus der Giessform entnommen, kalziniert und schliesslich gesintert, so dass das fertige Schleifkorn entsteht.

Die mit diesem Verfahren hergestellten Schleifkörner weisen zwei gegenüberliegende Grundflächen auf, die im Wesentlichen die gleiche geometrische Form haben. Den Schleifkörnern wird eine längere Lebensdauer zugewiesen, da von den Schleifkörnern während des Schleifens ständig kleine Stücke abbrechen, so dass sich neue Schneideflächen ergeben. Die Schleifkörner schärfen sich hierdurch selbst. Von Schleifkörnern mit einer Grundfläche in Form eines Dreiecks, insbesondere eines gleichseitigen Dreiecks, wird vermutet, dass sich beim elektrostatischen Streuen etwa ein bis zwei Drittel so orientieren, dass eine Spitze von der Unterlagen weg weist, während sich weitere Schleifkörner so orientieren, dass die Spitze auf die Unterlage zu weist.

In einem in EP 615 816 beschriebenen alternativen Verfahren werden mittels Extrusion zunächst längliche, stangenförmige Vorprodukte erzeugt, die anschliessend in einzelne Schleifkörner zerteilt werden. Die stangenförmigen Schleifkörner können somit beispielsweise eine Zylinder- oder Prismenform aufweisen.

In der WO 2009/085841 wird ein weiteres Herstellungsverfahren beschrieben, bei dem das Vorprodukt in der Giessform unter Bedingungen getrocknet wird, die zum Brechen des Vorprodukts führen. Die Bruchstücke weisen zumindest teilweise Oberflächen und Kanten auf, die komplementär zu den entsprechenden Oberflächen und Kanten der Giessform sind und daher den durch die Giessform definierten Winkel aufweisen. Diese Oberflächen und Kanten liefern eine erhöhte Schneidfähigkeit. Die weiteren, durch das Brechen entstandenen Oberflächen und Kanten sind hingegen unregelmässig.

Die WO 2010/077495 offenbart Schleifkörner, die eine durchgehende oder eine nicht durchgehende Öffnung enthalten oder eine schalenartige Form aufweisen. Auch Herstellungsverfahren für derartige Schleifkörner sind dort beschrieben. Weitere Schleifkörner mit undefinierten Öffnungen sind in der WO 2010/077518 offenbart. Die WO 2010/077491 befasst sich ebenfalls mit Schleifkörnern mit einer schalenartigen Form.

Aus der WO 2010/077519 sind Schleifkörner bekannt, die zwei gegenüberliegende Hauptflächen und dazwischen verlaufende, zu den Hauptflächen geneigte Seitenflächen aufweisen. Die verschiedenen Seitenflächen eines Schleifkorns können unter verschiedenen Winkeln relativ zu den Hauptflächen geneigt sein.

Das Dokument WO 2011/068724 zeigt ebenfalls Schleifkörner, welche eine Grundseite und eine Spitze sowie dazwischen verlaufende geneigte Seitenflächen aufweisen. Ähnliche Schleifkornformen sind auch in der WO 2011/109188 beschrieben.

Das Dokument WO 2010/077509 befasst sich mit Schleifkörnern, die eine Oberfläche mit einer Vielzahl von Furchen aufweisen. Diese Furchen werden mit Hilfe von komplementären Graten an der Unterseite der Giessform erzeugt.

Die WO 2011/068714 zeigt pyramidenförmige Schleifkörner mit einer parallelogrammförmigen, insbesondere rhombischen, einer drachenförmigen und einer superelliptischen Grundfläche.

Die WO 2011/139562 offenbart Schleifkörner in Form von Tetraedern und Abwandlungen davon. Beispielsweise können die Seitenflächen konkav oder konvex ausgebildet sein, die Ecken des Tetraeders können abgestumpft sein, oder die Kanten können kurvenförmig sein.

Die in WO 2012/018903 beschriebenen Schleifkörner enthalten zwei oder mehr plattenförmige Abschnitte, welche unter einem Winkel zueinander angeordnet sind.

Bei dem in WO 2012/061016 beschriebenen Verfahren wird zunächst ein abrasives Gebilde hergestellt, welches Schleifkornvorprodukte enthält, die über zerbrechliche Stege miteinander verbunden sind. Nach dem Sintern werden die Schleifkörner voneinander getrennt, indem die Stege durchbrochen werden.

Alternativ können Schleifkörner definierter Form auch mit einem Siebdruckverfahren hergestellt werden. Dies beschreibt beispielsweise die WO 96/12776. Dabei wird eine dimensionsstabile Dispersion durch Öffnungen mit definierter Form auf ein Transportband geleitet und anschliessend gehärtet. Die Öffnungen können beispielsweise in einem beweglichen Endlosband enthalten sein.

Eine Weiterentwicklung des Siebdruckverfahrens ist in der WO 2011/087649 offenbart. Bei diesem Verfahren wird die Dispersion mit Hilfe eines Differenzdrucks durch die Öffnungen des Endlosbandes hindurchgedrückt. Bei geeigneter Wahl der Viskosität der Dispersion können mit diesem Verfahren Schleifkörner hergestellt werden, deren Querschnitt sich von einer ersten Hauptseite zu einer zweiten gegenüberliegenden Hauptseite verjüngt.

In der WO 2012/061033 werden Verfahren zum Herstellen von Schleifkörnern definierter Form mit Hilfe von Laserstrahlung beschrieben. Zudem sind weitere spezielle Formen von Schleifkörnern offenbart. Beispielsweise können die Schleifkörner ein Hauptelement und mindestens drei sich davon erstreckende, stangenförmige Elemente enthalten. Insbesondere kann das Schleifkorn die Form eines Kreuzes, eines Grossbuchstaben "T", eines Sternes oder eines griechischen Kleinbuchstaben "λ" haben.

Allgemein wird davon ausgegangen, dass Schleifkörner mit definierter Form in mehrerlei Hinsicht verbesserte Eigenschaften aufweisen: Haben die Schleifkörner bereits zum Beginn ihrer Herstellung eine definierte Form und Grösse, so entfällt ein anschliessender Sortierschritt, mit dem die Schleifkörner ansonsten in verschiedene Grössenfraktionen aufgeteilt werden müssten. Zudem bleiben die Formen und Grössen auch zwischen verschiedenen Produktionschargen nahezu unverändert, was die Schleifeigenschaften sehr gut reproduzierbar macht. Des Weiteren können die Schleifkörner beispielsweise einen erhöhten Gesamtabtrag leisten, eine längere Lebensdauer haben, eine gesteigerte Oberflächengüte der bearbeiteten Oberfläche erzeugen oder ein besser reproduzierbares Schleifergebnis liefern.

Dennoch weisen die aus dem Stand der Technik bekannten Schleifkörner eine Reihe von Nachteilen auf. Beispielsweise offenbart die WO 2010/077518 flächige Schleifkörner mit einer Öffnung. Wenn diese Schleifkörner elektrostatisch auf eine Schleifmittel-Unterlage aufgestreut werden, so stellen sich viele dieser Schleifkörner senkrecht zur Unterlage auf. Hierdurch kann eine vorteilhafte Schleifwirkung entstehen, da Spitzen der Schleifkörner von der Unterlage weg weisen. Andererseits verändert sich der Querschnitt eines Schleifkorns nur noch relativ wenig, wenn es erst einmal bis zum Erreichen der Öffnung abgetragen ist. Allerdings können auch die aufgestellten Schleifkörner aufgrund der beim Schleifen wirkenden Kippkräfte leicht aus dem Bindemittel ausbrechen, was zu einer Reduktion der Standzeit führt. Beim mechanischen Streuen bleiben die Schleifkörner häufig von vornherein auf einer flachen oder abgeflachten Seite liegen. Hierdurch kann es passieren, dass viele der Schleifkörner vollständig im Grundbinder versinken und damit praktisch überhaupt keine Schleifwirkung erzielen können.

Es ist daher eine Aufgabe der vorliegenden Erfindung, die Nachteile des Standes der Technik zumindest teilweise zu beheben. Insbesondere soll also ein Schleifkorn bereitgestellt werden, welches auch beim mechanischen Streuen mit vergleichsweise hoher Wahrscheinlichkeit in einer gewünschten Orientierung auf einer Unterlage platziert werden kann. Zudem soll das Schleifkorn bevorzugt verbesserte Schnitteigenschaften aufweist.

Diese Aufgabe wird gelöst durch ein Schleifkorn mit definierter Form, mit mindestens einer Öffnung, **dadurch gekennzeichnet, dass** das Schleifkorn einen Basiskörper und mindestens eine von dem Basiskörper ausgehende Erhebung aufweist, welche zumindest einen Teil der Öffnung beinhaltet.

Bei dem Basiskörper und der mindestens einen Erhebung handelt es sich um gedachte Teilkörper, aus denen das gesamte Schleifkorn nur gedanklich zusammengesetzt ist. Dass das Schleifkorn mindestens zwei oder mehr solcher Teilkörper enthält, ist also nicht dahingehend zu verstehen, dass das Schleifkorn aus zwei oder mehr zunächst separat hergestellten Teilkörpern zusammengefügt wurde oder ist. Stattdessen sind die erfindungsgemässen Schleifkörner einstückig ausgebildet.

Eine solche Öffnung bildet Kanten, welche schon zu Beginn des Schleifprozesses im Einsatz sind. Dieser Effekt ist besonders ausgeprägt, wenn die Öffnung an einem vom Basiskörper abgewandten Ende der Erhebung ausmündet. Dies resultiert in einer besonderen Schärfe des Schleifkorns, die wiederum einen deutlich erhöhten Materialabtrag erlaubt. Insbesondere kann die Öffnung beim Nassschliff auch als Flüssigkeitsreservoir oder zur Aufnahme von Schmiermittel dienen. Durch die Öffnung verringert sich zudem auch der Querschnitt, der an einer zu bearbeitenden Oberfläche angreift. Dadurch verringert sich die Reibung und es entsteht weniger Wärme.

Das Vorhandensein einer Erhebung und die erfindungsgemässe Anordnung der Öffnung in der Erhebung sorgen für eine insgesamt grössere Höhe des Schleifkorns und damit für eine Verlängerung der Standzeit. Aufgrund des Basiskörpers kann ein erfindungsgemässes Schleifkorn auch besser den beim Schleifen entstehenden Kippkräften standhalten.

Der Basiskörper kann flächig ausgebildet sein. Darunter ist hier ein Basiskörper zu verstehen, dessen Ausdehnung in zwei Richtungen senkrecht zu einer Achse der Erhebung die Ausdehnung in der Richtung der Achse der Erhebung übersteigt, und zwar insbesondere in einem Verhältnis von mindestens 2:1, bevorzugt mindestens 3:1 und besonders bevorzugt mindestens 4:1. Damit kann gewährleistet werden, dass auch beim mechanischen Streuen eine Mehrheit der Schleifkörner mit diesem Basiskörper auf einer Schleifmittel-Unterlage zu stehen kommt und entsprechend die Öffnung von der Unterlage abgewandt ist. Zudem besteht der Vorteil, dass durch einen flächigen Basiskörper eine Art Fuss entsteht, der besonders dazu geeignet ist, das Schleifkorn besser an einer Unterlage zu fixieren. Besonders vorteilhaft hat sich erwiesen, wenn die von der Erhebung abgewandte Unterseite des Basiskörpers im Wesentlichen eben ist, da sie dann besonders gut als Standfläche des Schleifkorns geeignet ist.

Durch eine entsprechende Ausformung der Erhebung können vorteilhafte Eingriffswinkel zwischen der Erhebung und einer zu bearbeitenden Oberfläche erreicht werden, wie weiter unten im Detail beschrieben wird.

In einer bevorzugten Ausführungsform beinhaltet die Erhebung die ganze Öffnung. Die Öffnung erstreckt sich also nicht auch bis in den Basiskörper hinein. Dies gewährleistet eine maximale Ausbildung von Schneidkanten in der Erhebung, die hauptsächlich mit einer bearbeiteten Oberfläche in Kontakt gerät. Zudem sind ein solches Schleifkorn und insbesondere sein Basiskörper mechanisch stabil.

Von besonderem Vorteil hat sich erwiesen, wenn die Öffnung wenigstens an einem Ende der Erhebung im Wesentlichen rund ist, insbesondere kreisrund. Damit ist gewährleistet, dass das Schleifkorn unabhängig von seiner Ausrichtung gleichmässige Schnitteigenschaften aufweist.

In einer weiteren Ausführungsform durchdringt die Öffnung sowohl die Erhebung als auch den Basiskörper. Dies ist von besonderem Vorteil, wenn sich die Schleifeigenschaften während der Abnutzung kaum verändern sollen. Ausserdem kann durch geeignete Wahl der Aussenkontur der Erhebung ein vorteilhafter Eingriffswinkel in das zu bearbeitende Material gewährleistet werden, wie weiter unten im Detail erläutert wird.

Vorteilhafterweise ist zwischen dem Basiskörper und der Erhebung eine Stufe gebildet. Hierdurch ist das Schleifkorn besonders stabil gegenüber Kippkräften, wenn es mit der Unterseite seines Basiskörpers auf einer Schleifmittel-Unterlage fixiert ist. Zudem sorgt eine derartige Stufe für eine vorteilhafte Verbindung, da der Basiskörper dann ganz im Bindemittel eingeschlossen werden kann.

Bevorzugt ist in einer durch eine Achse der Erhebung verlaufenden Schnittebene ein Winkel zwischen der Achse und einer Aussenkontur der Erhebung gebildet, der zwischen +45° und -45°, bevorzugt zwischen +40° und -40°, weiter bevorzugt zwischen +30° und -30°, weiter bevorzugt zwischen +25° und -25°, weiter bevorzugt zwischen +20° und -20° und besonders bevorzugt zwischen +10° und -10° liegt. Dabei wird der Winkel als positiv bezeichnet, wenn sich die Erhebung an ihrem vom Basiskörper abgewandten Ende verjüngt; er wird als negativ angesehen, wenn sie sich dort verdickt. Dies führt zu besonders günstigen Eingriffswinkeln bei der Bearbeitung einer Oberfläche.

Die Form und die Grösse des Schleifkorns können etwa mit Hilfe eines Mikroskops bestimmt werden. Das erfindungsgemässe Schleifkorn kann eine Grösse im gesamten Grössenbereich aufweisen, der auch für herkömmliche Schleifkörner üblich ist. Üblicherweise führen Schleifkörner mit grösseren Grössen zu einem höheren Materialabtrag von einer bearbeiteten Oberfläche als kleinere Schleifkörner. Beispielsweise kann das Schleifkorn eine Grösse im Bereich von 100 µm bis 2000 µm haben. Diese Grösse kann experimentell mit Hilfe eines Mikroskops bestimmt werden. Bei einem erfindungsgemässen Schleifkorn wird die Grösse als die längste Ausdehnung in Richtung der Erhebung eines Schleifkornes verstanden.

Bei der oben beschriebenen Form des Schleifkorns handelt es sich um eine Idealisierung. Die Erfindung umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Giessform und/oder während eines Entfernens eines Vorprodukts des Schleifkorns aus einer Giessform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Giessform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst die Erfindung auch Schleifkörner, deren Form nur im Wesentlichen mit der idealisierten Form übereinstimmt. Beispielsweise werden auch Abschnitte der Aussenkontur oder Konturen von Schnitten durch das Schleifkorn als im Wesentlichen geradlinig angesehen, wenn sie zumindest teilweise oder sogar vollständig kurvenförmig sind und einen Krümmungsradius aufweisen, der mindestens das Doppelte, bevorzugt mindestens das Fünffache, besonders bevorzugt mindestens das Zehnfache der Höhe des Schleifkorns beträgt. Der Ort, an dem zwei Flächen der Aussenkontur aufeinander treffen, wird im Wesentlichen als Kante bezeichnet, und ein Punkt der Aussenkontur bzw. der Aussenkontur eines Schnittes wird im Wesentlichen als Ecke angesehen, wenn der Krümmungsradius dort höchstens 10 %, bevorzugt höchstens 5 %, besonders bevorzugt höchstens 2 % der Höhe des Schleifkorns beträgt. Des Weiteren werden Flächen, insbesondere Basisflächen oder Deckflächen, auch als im Wesentlichen eben verstanden, wenn sie gewölbt sind und Krümmungsradien aufweisen, die mindestens das Doppelte, bevorzugt mindestens das Fünffache, besonders bevorzugt mindestens das Zehnfache der Höhe des Schleifkorns betragen.

Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln. Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht.

Ein weiterer Aspekt der Erfindung betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% erfindungsgemässe Schleifkörner, so wie sie oben beschrieben wurden. Die übrigen in der Gesamtheit enthalten Schleifkörner können ebenfalls eine definierte Form aufweisen, welche jedoch von der erfindungsgemässen Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar und liegt im Rahmen der Erfindung, dass die in der Gesamtheit enthaltenen erfindungsgemässen Schleifkörner voneinander verschieden ausgebildet sind. So kann die Gesamtheit von Schleifkörnern beispielsweise einen ersten Anteil von Schleifkörnern einer ersten erfindungsgemässen Ausführungsform enthalten sowie einen zweiten Anteil von Schleifkörnern einer zweiten erfindungsgemässen Ausführungsform, die von der ersten erfindungsgemässen Ausführungsform verschieden ist. Insbesondere können sich die Schleifkörner der ersten erfindungsgemässen Ausführungsform in ihrer Grösse und/oder in ihrer Form von den Schleifkörnern der zweiten erfindungsgemässen Ausführungsform unterscheiden.

Die Gesamtheit von Schleifkörnern kann ausschliesslich aus identischen erfindungsgemässen Schleifkörnern bestehen; insbesondere hat die Gesamtheit dann eine punktförmige Grössenverteilung.

Die Gesamtheit von Schleifkörnern kann im Wesentlichen eine Grössenverteilung aufweisen, die einem in der Schleifmittelindustrie üblichen Grössenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäss dem FEPA-Standard aufweisen. Dabei bedeutet eine Grössenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemässer Schleifkörner und/oder mindestens einen Anteil nicht erfindungsgemässer Schleifkörner enthält. Jeder dieser Anteile kann für sich eine Grössenverteilung aufweisen, die jeweils einem der oben genannten, in der Schleifmittelindustrie üblichen Grössenstandards entspricht.

Ein erfindungsgemässes Schleifkorn oder eine erfindungsgemässe Gesamtheit von Schleifkörnern kann beispielsweise mit dem folgenden, aus US 5,201,916 bekannten Verfahren hergestellt werden:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der erfindungsgemässen Schleifkörner kann ein Giesswerkzeug verwendet werden, wobei das Giesswerkzeug mindestens eine Giessform umfasst, die mindestens eine Vertiefung mit einer jeweiligen Oberfläche aufweist, wobei die Oberfläche komplementär zur Form zumindest eines Teils der Oberfläche des Schleifkorns ist.

Bevorzugt befindet sich eine Vielzahl von Vertiefungen in der Giessform, sodass mit einem Giessvorgang eine Vielzahl von Schleifkörnern gegossen werden kann.

In einer Weiterentwicklung des aus US 5,201,916 bekannten Verfahrens ist die oben genannte Giessform vorteilhafterweise nur ein Teil eines mehrteiligen Giesswerkzeugs, welches zusätzlich mindestens ein Formelement, insbesondere eine weitere Giessform oder ein Stempelelement, umfasst, mit welchem ergänzend zu der in der ersten Giessform geformten Oberfläche zumindest ein Teil der restlichen Oberfläche des Schleifkorns formbar ist.

So können beispielsweise Stempelelemente vorgesehen sein, die in die gefüllten Vertiefungen der ersten Giessform geführt werden, wodurch auch Schleifkörner mit Hinterschnitten formbar sind.

Bevorzugt schliessen die Stempelelemente die Vertiefungen der Giessform nicht vollständig ab, so dass die flüchtige Komponente der Dispersion entweichen kann.

Kompliziertere Formen von Schleifkörnern (beispielsweise mit Erhebungen, die sich an ihrem vom Basiskörper abgewandten Ende wieder verdicken) sind in zusammensetzbaren Giessformen, ähnlich wie im Spritzgussverfahren, formbar. Dazu weist mindestens eine Giessform mindestens eine Einfüllöffnung auf, durch welche die Dispersion in die Vertiefungen gelangen kann.

Die Giessform und/oder das Stempelelement kann beispielsweise Silikon enthalten oder daraus bestehen. Die Vertiefungen können eine offene Deckfläche aufweisen, durch die die Dispersion eingefüllt werden kann. Die Vertiefungen der Giessform weisen jeweils eine Oberfläche auf, deren Form komplementär zur Form zumindest eines Teils der Oberfläche des gewünschten Schleifkorns ist. Insbesondere kann die Oberfläche einer Vertiefung komplementär zu dem Teil der Oberfläche des Schleifkorns sein, der nicht die Unterseite des Basiskörpers bildet.

Derartige Vertiefungen können so ausgebildet sein, dass eine im Wesentlichen sich verengende Mulde ausgebildet ist, die eine innen liegende Erhebung aufweist, die komplementär zur gewünschten Öffnung des Schleifkorns ist. Diese Erhebung kann insbesondere bis zur Ebene der Deckfläche der Giessform ausgebildet sein oder über die Ebene dieser Deckfläche hinausragen, um zu gewährleisten, dass das spätere Schleifkorn eine durchgehende Öffnung aufweist.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

Noch ein Aspekt der Erfindung betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als erfindungsgemässe Schleifkörner ausgebildet sein, so wie sie oben beschrieben wurden. Die übrigen Schleifkörner können ebenfalls eine definierte Form aufweisen, welche jedoch von der erfindungsgemässen Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Die Erfindung umfasst auch ein Verfahren zum Herstellen eines wie oben beschriebenen erfindungsgemässen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Aufgrund der erfindungsgemässen Form der Schleifkörner wird auch beim mechanischen Streuen ein grosser Anteil der Schleifkörner so orientiert, dass der oben beschriebene Vorteil vorliegt: Schleifkörner mit erfindungsgemässen Basiskörpern bleiben beim mechanischen Streuen in einer Mehrheit in einer gewünschten Orientierung auf einer Schleifmittel-Unterlage liegen, in der die Erhebung und die darin zumindest teilweise enthaltene Öffnung von der Unterlage weg weisen. Auf eine aufwändigere elektrostatische Streuung kann also verzichtet werden.

Ferner richtet sich die Erfindung auch auf Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Grössen von 500 µm oder weniger besonders geeignet.

Im Folgenden wird die Erfindung mit Hilfe mehrerer Ausführungsbeispiele und Zeichnungen näher erläutert. Dabei zeigen
Figur 1: eine dreidimensionale Ansicht einer ersten Ausführungsform eines erfindungsgemässen Schleifkorns;
Figur 2: eine mögliche Schnittansicht B-B eines erfindungsgemässen Schleifkorns;
Figur 3A und 3B weitere mögliche Schnittansichten eines erfindungsgemässen Schleifkorns;
Figur 4A bis 4G: mögliche Querschnitte des Schnittes A-A aus Figur 1, bzw. mögliche Konturen der Öffnung oder des Basiskörpers;
Figur 5A bis 5H: mögliche Konturen im Bereich der Erhebung 12 entlang des Schnittes B-B aus Figur 1, bzw. mögliche Innenkonturen der Öffnung;
Figur 6 Detail zum Eingriffswinkel.

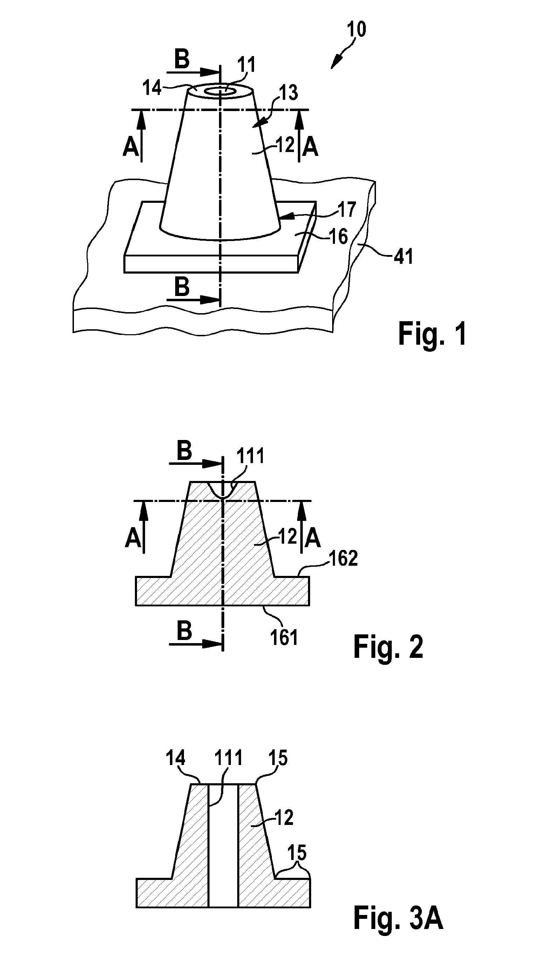

Die Figur 1 zeigt ein erstes bevorzugtes Ausführungsbeispiel eines Schleifkorns 10 mit einem Basiskörper 16 und einer davon ausgehenden Erhebung 12 mit einer Öffnung 11, die an einem vom Basiskörper 16 abgewandten Ende der Erhebung 12 ausmündet. Zwischen dem Basiskörper 16 und der Erhebung 12 ist eine Stufe 17 gebildet. Das Schleifkorn 10 enthält nur gedanklich einen Basiskörper 16 und eine Erhebung 12, wie oben erläutert wurde; es ist also tatsächlich einstückig ausgebildet.

Der Basiskörper 16 weist eine von der Erhebung 12 abgewandte ebene Unterseite 161 auf. Ein Schleifkorn 10, welches einen Basiskörper 16 aufweist, besitzt den Vorteil, dass dieses Schleifkorn 10 eine äusserst stabile Lage auf einer Schleifmittel-Unterlage 41 einnimmt, wenn es mit der Unterseite 161 auf dieser Unterlage 41 aufliegt. In dieser stabilen Lage ist auch gewährleistet, dass eine Erhebung 12 von der Unterlage 41 weg weist. Besonders vorteilhaft ist es, wenn sich eine Achse X mindestens einer Erhebung 12 in einem Winkel von der Unterseite 161 des Basiskörpers 16 erstreckt, der mindestens 30°, bevorzugt mindestens 60°, weiter bevorzugt mindestens 75° und besonders bevorzugt 90° beträgt.

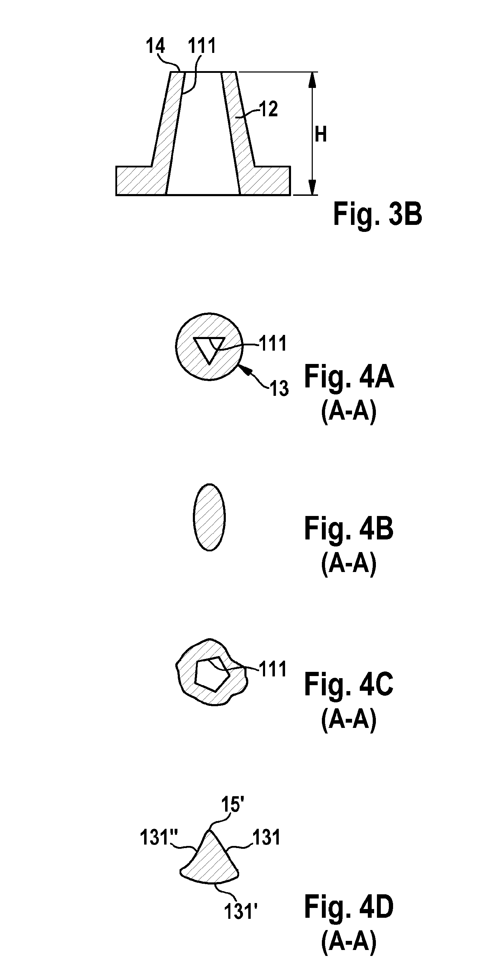

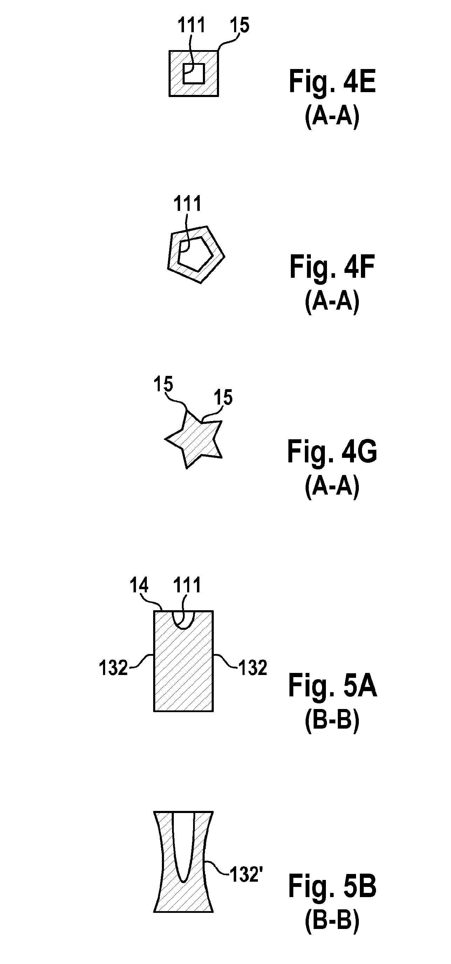

Eine Erhebung 12 kann verschiedene Geometrien besitzen. Der Querschnitt senkrecht zur Achse X ist als Schnitt A-A dargestellt. Die Figuren 4A bis 4G zeigen beispielhaft mögliche Querschnitte in dieser Ebene. Querschnitte einer solchen Erhebung 12 können aus geometrischen Basisformen bestehen. Als geometrische Basisformen werden hierbei insbesondere Polygone (wie etwa Dreiecke oder Vierecke, beispielsweise Trapeze, oder auch sternförmige Polygone), Kreise und Ovale angesehen. Eine kreisförmige Fläche gemäss Figur 4A kann nach dem Herstellprozess verformt sein, wie z.B. in Figur 4B gezeigt. Eine beispielhafte Aussenkontur 13 nach dem Herstellen des Schleifkorns ist in Figur 4C gezeigt. Wie in Figur 4D beispielhaft gezeigt ist, können an einer dreieckigen Querschnittsfläche verschiedene Fertigungstoleranzen auftreten, die zum Teil weiter vorteilhafte Eigenschaften aufweisen können. Die Aussenkontur 13 kann beispielsweise einen ebenen Abschnitt 131, einen konkaven Abschnitt 131" und einen konvexen Abschnitt 131' enthalten, wie in Figur 4D gezeigt ist. Auch entsprechende Kanten 15 zwischen Flächen müssen nicht spitz zulaufen, sondern können abgerundet sein; in Figur 4D ist eine solche Kante 15' gezeigt. Im Allgemeinen können die Querschnitte längs der Achse X der Erhebung 12 auch unterschiedliche Konturen 13 haben. Insbesondere kann eine Erhebung 12 mit einem Querschnitt nach einer der Figuren 4A bis 4G beginnen und in einem anderen Querschnitt nach einer der Figuren 4A bis 4G enden. Auch eine in sich verdrillte Kontur 13 ist möglich, so dass eine Art Schraube entstehen kann. Von besonderem Vorteil ist eine kegelförmige Erhebung 12, da ein solches Schleifkorn 10 in einer bevorzugten Lage zu einer zu bearbeitenden Oberfläche allseitig gleichmässige Schleifeigenschaften vorweist.

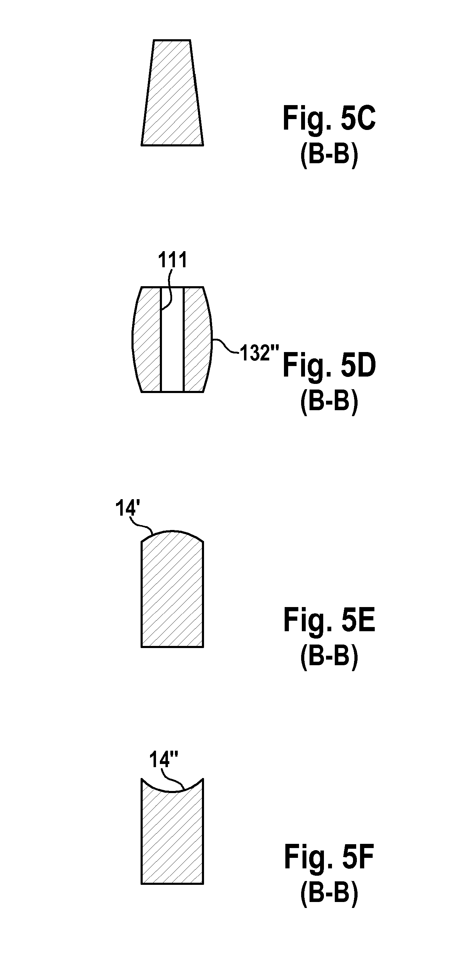

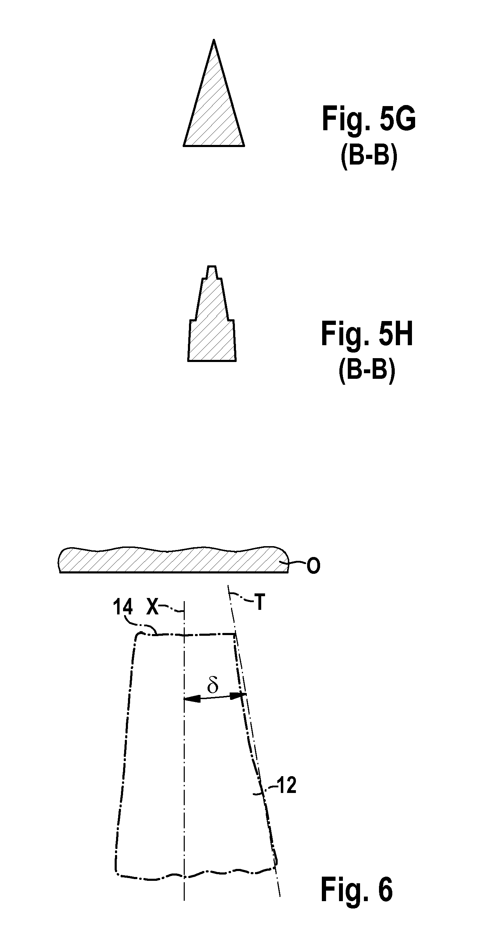

Betrachtet man den Verlauf des Querschnittes über die Achse X der Erhebung 12, d.h. vom der Basiskörper 16 bis hin zu einer beispielhaften Endfläche 14, sind auch verschieden Ausgestaltungen möglich. Gezeigt ist dies in den Figuren 5A bis 5H, die Querschnitte durch eine Erhebung 12 zeigen. So kann die Erhebung 12 in ihrer Dicke konstant sein (Figur 5A) oder abnehmen (Figur 5C). Beispielhaft kann die Kontur 132 eines solchen Querschnittes auch einen konkaven Abschnitt 132' (Figur 5B) oder einen konvexen Abschnitt 132" (Figur 5D) oder auch eine Mischung zwischen solchen Formen sein. Insbesondere die konkave Kontur 132' ist von vorteilhafter Wirkung, da in der in Figur 1 gezeigten bevorzugten Lage des Schleifkorns 10 ein vorteilhafter Eingriffswinkel δ zwischen der Achse X und einer Tangente T zu seiner Kontur 13 zu einer zu bearbeitenden Oberfläche O entsteht. Bevorzugt liegt dieser Winkel zwischen +45° und -45°, weiter bevorzugt zwischen +40° und -40°, weiter bevorzugt zwischen +30° und -30°, weiter bevorzugt zwischen +25° und -25°, weiter bevorzugt zwischen +20° und -20° und besonders bevorzugt zwischen +10° und -10°. In dem in Figur 6 gezeigten Beispiel, in dem sich die Erhebung 12 an ihrem vom Basiskörper abgewandten Ende verjüngt, ist der Winkel δ positiv. In dem Querschnitt gemäss Figur 5B ist er hingegen negativ, da sich dort die Erhebung 12 an dem vom Basiskörper abgewandten Ende verdickt. Insbesondere ist es möglich, dass eine solche Kontur Stufen aufweist (Figur 5H). Eine Erhebung 12 eines solchen Schleifkorns 10 kann, ausgehend von einem Basiskörper 11, bevorzugt in einer Endfläche 14 enden. Eine solche Endfläche 14 kann eben sein oder aber auch als konvexe Endfläche 14' (Figur 5E) oder als konkave Endfläche 14" (Figur 5G) ausgebildet sein. Besonders bevorzugt ist eine solche Endfläche 14 im Wesentlichen rechtwinklig zu einer Achse X einer solchen Erhebung 12. Insbesondere können solche Endflächen 14 auch durch das Entnehmen eines Schleifkorns 10 aus einer Giessform gebildet werden und Bruchkanten aufweisen.

Die Öffnung 11 kann dergestalt sein, dass sie in einer Endfläche 14 ein Sackloch 11 bildet, so wie es in den Figuren 2, 5A und 5B dargestellt ist. Die Öffnung 11 kann auch dergestalt sein, dass sie nicht vollständig in der Endfläche 14 mündet, sondern sich zumindest teilweise auch in die Kontur 13 der Erhebung 12 erstreckt. In einer bevorzugten Ausführungsform durchdringt die Öffnung 11 sowohl die Erhebung 12 als auch den Basiskörper 16 gänzlich, so wie es in den Figuren 3A und 3B wiedergegeben ist. Es ist weiters möglich, dass die Öffnung 11 in einer oberen Endfläche 14 mit einem ersten Querschnitt und in der Unterseite 161 des Basiskörpers 16 mit einem zweiten Querschnitt ausgebildet ist, der vom ersten Querschnitt verschieden ist (Figur 3B).

Der Querschnitt zu einer axialen Richtung einer solchen Öffnung 11 kann beispielhaft entsprechend zu den Aussenkonturen der Erhebungen aus den Figuren 4A bis 4G ausgebildet sein. Querschnitte einer solchen Öffnung 11 können aus geometrischen Basisformen bestehen. Als geometrische Basisformen werden hierbei insbesondere Polygone (wie etwa Dreiecke oder Vierecke, beispielsweise Trapeze, oder auch sternförmige Polygone), Kreise und Ovale angesehen. Eine kreisförmige Fläche (analog zur Aussenkontur der Erhebung gemäss Figur 4A) kann nach dem Herstellprozess verformt sein (analog zur Aussenkontur der Erhebung in Figur 4B). Beispielsweise könnte die Innenkontur 111 der Öffnung 11 nach dem Herstellen des Schleifkorns eine Form haben wie die Aussenkontur der Erhebung gemäss Figur 4C. Wie in Figur 4D beispielhaft gezeigt ist, können an einer dreieckigen Querschnittsfläche verschiedene Fertigungstoleranzen auftreten, die zum Teil weiter vorteilhafte Eigenschaften aufweisen können. Eine Fläche 131 der Innenkontur 111 kann z.B. im Querschnitt parallel zum Schnitt A-A sowohl einen konkaven Abschnitt 131' oder einen konvexen Abschnitt 131" oder auch eine Mischung zwischen diesen Formen aufweisen. Auch entsprechende Kanten zwischen Flächen müssen nicht in einer Spitze 15 zulaufen, sondern können als abgerundete Ecken 15' ausgebildet sein. Es ist auch möglich, dass die Innenkontur 111 der Öffnung 11 eine Verbindung zur Kontur 13 der Erhebung 12 aufweist. Insbesondere kann die Öffnung 11 als eine Art Schlitz längs zur Achse A der Erhebung 12 ausgebildet sein. Es ist im Weiteren möglich, dass dergestalt ausgebildete Öffnungen 11 in mehrfacher Ausführung im Schleifkorn 10 vorhanden sind, insbesondere radial zu einer Achse X einer Erhebung 12 angeordnet. Besonders bevorzugt ist eine kreisrunde Öffnung 11.

Im Allgemeinen können Kanten 15, die in den Ausführungsbeispielen scharf gezeichnet sind, auch einen rundlichen Verlauf aufweisen, wie die Kante 15' in Figur 4D.

Betrachtet man den Verlauf des Querschnittes der Öffnung 11 längs der Achse X der Erhebung 12, d.h. vom Basiskörper 16 bis hin zu einer beispielhaften Endfläche 14, sind auch verschiedene Ausgestaltungen möglich. Beispielhaft kann der Schnitt der Innenkontur 111 der Öffnung 11 einen Verlauf haben wie der Schnitt der Aussenkontur der Erhebungen nach den Figuren 5A bis 5H. So kann die Öffnung 11 in ihrer Dicke konstant sein (analog zur Aussenkontur der Erhebung in Figur 5A) oder auch abnehmen (analog zur Aussenkontur der Erhebung in Figur 5C). Die Innenkontur 132 eines solchen Querschnittes kann beispielsweise einen ebenen Abschnitt 131 enthalten (analog zur Aussenkontur der Erhebung in Figur 5A), einen konkaven Abschnitt 132" (analog zur Aussenkontur der Erhebung in Figur 5B) oder einen konvexen 132' (analog zur Aussenkontur der Erhebung in Figur 5D) enthalten. Insbesondere die konkave Innenkontur 132" ist von vorteilhafter Wirkung, da in einer bevorzugten Lage des Schleifkorns 10 zu einer Schleifmittel-Unterlage ein vorteilhafter Eingriffswinkel zu einer zu bearbeitenden Oberfläche O entsteht. Bevorzugt liegt dieser Winkel zwischen +45° und -45°, weiter bevorzugt zwischen +40° und -40°, weiter bevorzugt zwischen +30° und -30°, weiter bevorzugt zwischen +25° und -25°, weiter bevorzugt zwischen +20° und -20° und besonders bevorzugt zwischen +10° und -10°. Der Winkel wird dabei als positiv angesehen, wenn sich die Öffnung an ihrem vom Basiskörper abgewandten Ende verbreitert; sie wird als negativ angesehen, wenn sie sich dort verjüngt. Insbesondere ist es möglich, dass eine solche Kontur Stufen aufweist (analog zur Aussenkontur der Erhebung in Figur 5H). In einer bevorzugten Ausführungsform entsteht, wie in Figur 3B gezeigt, eine im Wesentlichen gleichmässige Wandstärke. Das Schleikorn 10 kann eine Höhe H aufweisen, die als längste Ausdehnung in Richtung der Erhebung 12 des Schleifkorns 10 verstanden wird und beispielhaft in Figur 3B gezeigt ist; sie kann etwa 500 µm betragen.

Der Basiskörper 16 dient zur besseren Befestigung auf einer Unterlage 41. Beispielhaft kann die Aussenkontur im Sinne der Konturen aus den Figuren 4A bis 4G ausgeführt sein. Der Basiskörper 16 ist vorzugsweise aus geometrischen Basisformen aufgebaut. Die Basisfläche 161 und die Deckfläche 162 können unterschiedliche Konturen, beispielhaft im Sinne der Konturen aus den Figuren 4A bis 4G, haben.

Von besonderem Vorteil ist ein Schleifkorn 10 mit einer kegelförmigen Erhebung 12 und einer kreisförmigen Öffnung 11 wie in Figur 1 dargestellt.

Die erfindungsgemässen Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschliessend wird die gemahlene Dispersion in eine Giessform aus Silikon eingefüllt, die Vertiefungen in der Form der gewünschten Schleifkörner enthält. Für einige Ausführungsformen des Schleifkorns kann ein wie oben beschriebenes zusätzliches Formelement verwendet werden, beispielsweise eine weitere Giessform, mit welchem ergänzend zu der in der Giessform geformten Oberfläche zumindest ein Teil der restlichen Oberfläche des Schleifkorns formbar ist. Daraufhin wird die flüchtige Komponente, also das Wasser, aus der Dispersion entfernt. Hierdurch entsteht ein Schleifkorn-Vorprodukt, welches aus der Giessform entfernt wird. In einem abschliessenden Schritt wird das Vorprodukt als Schüttgut bei 1550 °C für 5 Minuten gesintert. Der Dispergator wird beim Sintern herausgebrannt.

Ein erfindungsgemässer Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschliessend werden 600 g/m² der erfindungsgemässen Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

## Patentansprüche

1. Schleifkorn (10) mit mindestens einer Öffnung (11), **dadurch gekennzeichnet, dass** das Schleifkorn (10) einen Basiskörper (16) und mindestens eine von dem Basiskörper (16) ausgehende Erhebung (12) aufweist, welche zumindest einen Teil der Öffnung (11) beinhaltet.

2. Schleifkorn (10) nach Anspruch 1, **dadurch gekennzeichnet, dass** die Erhebung (12) die ganze Öffnung (11) beinhaltet.

3. Schleifkorn (10) nach einem der oberen Ansprüche, **dadurch gekennzeichnet, dass** die Öffnung (11) wenigstens an einem Ende der Erhebung (12) im Wesentlichen rund, insbesondere kreisrund ist.

4. Schleifkorn (10) nach einem der oberen Ansprüche, **dadurch gekennzeichnet, dass** die Öffnung (11) die Erhebung (12) und den Basiskörper (16) durchdringt.

5. Schleifkorn (10) nach einem der oberen Ansprüche, **dadurch gekennzeichnet, dass** zwischen dem Basiskörper (16) und der Erhebung (12) eine Stufe gebildet ist, insbesondere eine Stufe, bei der die Aussenkontur (13) der Erhebung (12) innerhalb der Aussenkontur des Basiskörpers (16) liegt.

6. Schleifkorn (10) nach einem der oberen Ansprüche, **dadurch gekennzeichnet, dass** in einer durch eine Achse (A) der Erhebung (12) verlaufenden Schnittebene ein Winkel (δ) zwischen der Achse (A) und einer Aussenkontur (13) der Erhebung (12) gebildet ist, der zwischen +45° und -45°, bevorzugt zwischen +40° und -40°, weiter bevorzugt zwischen +30° und -30°, weiter bevorzugt zwischen +25° und -25°, weiter bevorzugt zwischen +20° und -20° und besonders bevorzugt zwischen +10° und -10° liegt.

7. Schleifkorn (10) gemäss einem der vorangehenden Ansprüche,
**dadurch gekennzeichnet, dass**
es ein keramisches Material, insbesondere ein polykristallines keramisches Material, enthält oder daraus besteht, bevorzugt Aluminiumoxid, besonders bevorzugt α-Al₂O₃.

8. Gesamtheit von Schleifkörnern (10),
**dadurch gekennzeichnet, dass**
sie mindestens 20 Gew.-%, bevorzugt mindestens 50 Gew.-%, besonders bevorzugt mindestens 90 Gew.-% Schleifkörner (10) nach einem der vorangehenden Ansprüche enthält.

9. Verfahren zum Herstellen mindestens eines Schleifkorns (10) oder einer Gesamtheit von Schleifkörnern (10) gemäss einem der vorangehenden Ansprüche,
**gekennzeichnet durch** die folgenden Schritte:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform ;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn (10) zu erhalten.

10. Giessform zum Herstellen mindestens eines Schleifkorns (10) nach einem der Ansprüche 1 bis 7, wobei die Giessform mindestens eine Vertiefung, bevorzugt eine Vielzahl von Vertiefungen, mit einer jeweiligen Oberfläche aufweist, wobei die Oberfläche komplementär zur Form zumindest eines Teils der Oberfläche des Schleifkorns (10) ist.

11. Schleifartikel, enthaltend eine Gesamtheit von Schleifkörnern (10) gemäss Anspruch 8.

12. Verfahren zum Herstellen eines Schleifartikels gemäss Anspruch 11, enthaltend einen Schritt, in dem eine Gesamtheit von Schleifkörnern (10) gemäss Anspruch 8 an und/oder in einem Substrat (41) fixiert wird, insbesondere mittels eines Bindemittels.

13. Verfahren zum Schleifen einer Oberfläche (O), insbesondere einer lackierten Oberfläche, mit einem Schleifartikel gemäss Anspruch 11.
